# EUROPEAN PATENT APPLICATION

(11) **EP 2 113 169 A1**
(43) Date of publication of application: **04.11.2009**
(21) Application number: 08710467.5
(22) Date of filing: 22.02.2008
(51) Int. Cl.: A01K 13/00, A01J 7/04, B08B 7/04

(54) **CLEANING DEVICE AND CLEANING METHOD FOR THE DEVICE**

(30) Priority: 23.02.2007 JP 2007043480
(71) Applicant: Orion Machinery Company Limited, Nagano 382-8502 (JP)
(72) Inventor: OBINATA, Yoshiharu, Suzaka-shi Nagano 382-8502 (JP); OKATANI, Toshiyuki, Suzaka-shi Nagano 382-8502 (JP); HIRATA, Akira, Saitama-shi Saitama 331-8537 (JP); GOTO, Hiroshi, Saitama-shi Saitama 331-8537 (JP); KAWAIDE, Tetsuo, Saitama-shi Saitama 334-8537 (JP)
(74) Representative: Ward, James Norman
(86) International application number: PCT/JP2008/000314
(87) International publication number: WO 2008/102567

(57) **Abstract**

A washing device is provided with a washing member (8) that is disposed in an insertion port (2i) in a housing portion (2) into which a protruding object to be washed (M) can be inserted, that rotates along with a brush mechanism portion (3), that includes a washing portion (8w) on the upper surface thereof, that includes, in the middle thereof, an insertion hole (8i) through which the object to be washed (M) is inserted and that is formed in the shape of a disc; a jet portion (5) that includes an upper jet portion (5u) disposed above the washing member (8) and a lower jet portion (5d) disposed below the washing member (8); and washing solution supply means (6) that supplies washing solution (L) to the upper jet portion (5u) and/or the lower jet portion (5d). Washing is performed by jetting the washing solution (L), at least, above the washing member (8) from the jet portion 5 and rotating the washing member (8), and thereafter the jetting of the washing solution (L) above the washing member (8) is stopped and the washing member (8) is rotated to remove the remaining washing solution.

## Description

### Technical field

The present invention relates to a washing device that is preferably used when a protruding object to be washed such as a teat of a dairy cow is washed and that is provided with a washing unit and a body unit, and also relates to a washing method using such a washing device.

### Background art

Generally, since soil and bacteria adhere to teats of a dairy cow that is milked, a predetermined wiping operation (a washing operation) on the dairy cow is performed before milking so that milk is hygienically produced, the quality of milk is prevented from being degraded and mastitis or the like of the cow is avoided. Since such a wiping operation generally requires a large-scale washing device, a washing device is also conventionally known in patent document I that is configured to be portable to enhance compactness and usability.

The washing device for protrusions disclosed in patent document 1 is a washing device that accommodates a protrusion internally to wash the outer circumferential portion of the protrusion and that includes: a cylindrical outer cover, a brush for washing the protrusion and a groove portion extending in a longitudinal direction, in a wall portion; a first washing member which is rotatably accommodated in the outer cover; rotation means for rotating the first washing member in both directions; and a second washing member which engages with the groove portion to freely move in the longitudinal direction and which is provided with a brush in the wall portion to wash the end of the protrusion. In the washing device, on the upper surface of the second washing member with which the end portion of the protrusion makes contact, an end portion washing member is placed that changes its shape according to the shape of the end portion, that slides in contact with the end portion to perform washing and that has elasticity.

### Citation List

Patent Literature 1: JP-A-2005-192404

### Summary of Invention

### Technical Problem

However, the conventional washing device (the washing device for protrusions) disclosed in patent document 1 described above suffers from the following problems to be solved.

First, the base portion of a teat and the end portion of the teat that is rough are more likely to be insufficiently washed. Accordingly, soil adheres to a teat cup liner at the time of milking, and this makes it difficult to sufficiently achieve in that milk is hygienically produced, the quality of milk is prevented from being degraded and mastitis or the like of the cow is avoided; since soil is more likely to be left, it is necessary to perform a checking operation and an additional manual washing after washing, with the result that the workability and the operation efficiency are lowered.

Second, when rubbish (such as rice straw, sawdust powder, chaff or dung) adheres to a teat, such rubbish is more likely to adhere to a washing brush. This is more likely to reduce washing capability, with the result that the rubbish attached to the washing brush frequently needs to be removed.

Third, when the base portion of a teat is soiled, it is more likely to suffer a problem in that, since a manual washing is required, an unnecessary burden is imposed on the body of a cow or it takes longer than necessary to perform such washing.

Fourth, since the conventional washing device is configured to be portable, it is not easy to provide the function of removing washing solution that adheres to a teat after washing, and to increase functions is limited. Thus, in order to remove the washing solution that adheres to the teat after washing, it is necessary to perform a manual wiping operation. Consequently, the number of operational steps is increased, and, if the wiping operation fails to be performed or is insufficiently performed, milk may be contaminated with the washing solution.

An object of the present invention is to provide a washing device that overcomes such problems encountered in the related art and a washing method using such a washing device.

### Solution to Problem

To overcome the foregoing problems, according to the present invention, there is provided a washing device 1 including: a washing unit U 1 including: a housing portion 2 into which a protruding object to be washed M can be inserted through an insertion port 2i; a brush mechanism portion 3 washing the object to be washed M that is inserted into the housing portion 2; a rotary drive portion 4 rotating the brush mechanism portion 3; and a jet portion 5 jetting washing solution L into the housing portion 2, and a body unit U2 including at least: washing solution supply means 6 supplying the washing solution L to the washing unit U1; and electric power supply means 7 supplying electric power, in which the washing device further includes: a washing member 8 that is disposed in the insertion port 2i, that rotates along with the brush mechanism portion 3, that includes a washing portion 8w on an upper surface thereof, that includes, in a middle thereof, an insertion hole 8i through which the object to be washed M is inserted and that is formed in the shape of a disc; a jet portion 5 that includes an upper jet portion 5u disposed above the washing member 8 and a lower jet portion 5d disposed below the washing member 8; and washing solution supply means 6 supplying the washing solution L to the upper jet portion 5u and/or the lower jet portion 5d.

In this case, according to the preferred aspect of the present invention, the washing member 8 can be provided with a washing portion 8w having one or more than two fin portions 8wf... protruding upward from the upper surface thereof. Moreover, the washing member 8 can be integrally formed of elastic material. The brush mechanism portion 3 can be provided with a first washing brush portion 3a for washing the circumferential surface portion Mf of the object to be washed M and a second washing brush portion 3b for washing the end portion Ms of the object to be washed M. The second washing brush portion 3b can be formed with an end surface washing brush 3bc that makes contact with the end surface of the end portion Ms of the object to be washed M and boundary curved surface washing brushes 3bx, 3by and 3bz that radially extend from the end surface washing brush 3bc and that makes contact with at least the boundary curved surface extending from the end surface to the circumferential surface portion. A brush molded member 32 formed of elastic material can be used as the end surface washing brush 3bc and the boundary curved surface washing brushes 3bx.... The end surface washing brush 3bc can have, at the end thereof, edge portions 33e... for scraping soil on the end surface of the object to be washed M and can be formed with a plurality of protrusion portions 33... disposed at a predetermined density. The protrusion portions 33 ... are preferably formed cylindrically. The boundary curved surface washing brushes 3bx... can be provided with one or more than two sheet pieces 34s ... having a large number of slit portions 34c.... In this case, the boundary curved surface washing brushes 3bx... can be formed such that protrusions in the lower portion of the sheet pieces 34s... are equal in length to protrusions in the middle portion thereof or such that protrusions in the lower portion of at least one of the sheet pieces 34s ... are longer in length than protrusions in the middle portion thereof. Moreover, brush supporting means 11 for supporting the second washing brush portion 3b such that the second washing brush portion 3b freely moves up and down and brush force applying means 12 that exerts an upward force on the second washing brush portion 3b can be provided, and the washing device 1 can be provided with washing solution collection means 13 that collects the remaining washing solution L after usage within the housing portion 2 and stores it in the body unit U2.

On the other hand, in order to overcome the foregoing problems, a method of performing washing with the washing device 1, includes the steps of: inserting the protruding object to be washed M into the housing portion 2 through an insertion portion 2i; rotating, with a rotary drive portion 4, the brush mechanism portion 3 disposed within the housing portion 2; and jetting washing solution L from a jet portion 5 into the housing portion 2. In this method, since one or more than two fin portions 8wf... protruding upward from the upper surface are provided in the insertion portion 2i and the washing member 8 that includes, in the middle thereof, an insertion hole 8i through which the object to be washed M is inserted and that is formed in the shape of a disc is disposed, washing is performed by jetting the washing solution L, at least, above the washing member 8 from the jet portion 5 and rotating the washing member 8, and thereafter the jetting of the washing solution L above the washing member 8 is stopped and the washing member 8 is rotated to remove the remaining washing solution.

In this case, according to the preferred aspect of the present invention, when the washing solution L is jetted above the washing member 8, the washing member 8 can be rotated alternately in forward and reverse directions, that is, in both directions Fpn. Moreover, when the jetting of the washing solution L above the washing member 8 is stopped, the washing member 8 can be rotated in a forward direction, that is, in one direction Fp. The jet portion 5 can be provided with an upper jet portion 5u disposed above the washing member 8 and a lower jet portion 5d disposed below the washing member 8. Thus, it is possible to jet the washing solution L from the lower jet portion 5d, rotate the washing member 8 to perform washing, stop the jetting of the washing solution L from the upper jet portion 5u and rotate the washing member 8 to remove the remaining washing solution L.

### Advantageous Effects of Invention

With the washing device 1 configured as described above and according to the present invention and the washing method using thereof, the following significant benefits can be obtained.
(1) Since the washing member 8 having the washing portion 8w on the upper surface rotates and the washing solution L is jetted from the upper jet portion 5u disposed above the washing member 8, it is possible to wash the base portion Mmb of the protruding object to be washed M effectively and sufficiently. Thus, when the teat Mm is used as the object to be washed M, it is possible not only to prevent soil from adhering to a teat cup liner and help achieve in that milk is hygienically produced, the quality of milk is prevented from being degraded and mastitis or the like is avoided but also to prevent soil from being left. Hence, it is possible to eliminate or reduce a checking operation and an additional manual washing after the washing, with the result that the workability and the operation efficiency can be improved.

(2) Even when rubbish (such as rice straw, sawdust powder, chaff or dung) adheres to the object to be washed M, before the rubbish is scraped by the brush of the brush mechanism portion 3, it is removed by the washing member 8, and is quickly flowed away with the washing solution L, with the result that the rubbish can be prevented from adhering to the brush of the brush mechanism portion 3. Thus, it is possible not only to eliminate or reduce the lowering of washing performance and a frequent operation of removing rubbish that adheres to the brush but also to effectively wipe soil with a smaller amount of the washing solution L.

(3) Since the base portion Mmb of the object to be washed M is washed with the special washing member 8 having the washing portion 8w on the upper surface thereof, it is unnecessary to press the washing unit U1 onto the base portion Mmb with an excessive force. Thus, it is possible not only to prevent an unnecessary burden from being imposed on the base portion Mmb but also to prevent the washing period from being made longer unnecessarily.

(4) Since the jet portion 5 is provided that is composed of the upper jet portion 5u disposed above the washing member 8 and the lower jet portion 5d disposed below the washing member 8, it is possible to effectively wash an area from the end portion Ms to the base portion Mmb of the object to be washed M with a small amount of the washing solution L.

(5) When the washing member 8 is provided with one or more than two fin portions 8wf... protruding upward from the upper surface according to the preferred aspect, after washing, the jetting of the washing solution L through the upper jet portion 5u can be stopped and the washing member 8 can be rotated, and this makes it possible to make the washing member 8 function as a blowing fan. Thus, it is possible to quickly remove the remaining solution and dry the object to be washed M.

(6) The washing member 8 is integrally formed of elastic member according to the preferred aspect, and this makes it possible not only to easily fabricate it with a single component at a low cost but also to protect the object to be washed M and wash the base portion Mmb sufficiently.

(7) According to the preferred aspect, the brush mechanism portion 3 is configured such that the first washing brush portion 3a for washing the circumferential surface portion Mf of the object to be washed M and the second washing brush portion 3b for washing the end portion Ms are provided, and such that the brush supporting means 11 for supporting the second washing brush portion 3b so that the second washing brush portion 3b freely moves up and down and the brush force applying means 12 for exerting an upward force on the second washing brush portion 3b are provided. Thus, it is possible to wash each end portion Ms of the objects to be washed M of different lengths without causing unevenness satisfactorily all the time.

(8) According to the preferred aspect, the second washing brush portion 3b is provided with the end surface washing brush 3bc that makes contact with the end surface of the end portion Ms of the object to be washed M and the boundary curved surface washing brushes 3bx... that radially extend from the end surface washing brush 3bc and that makes contact with at least the boundary curved surface extending from the end surface of the end portion Ms to the circumferential surface portion, it is possible not only to enhance the washing performance on the end portion Ms of the object to be washed M but also to perform the washing effectively and satisfactorily.

(9) According to the preferred aspect, the brush molded member 32 formed of elastic material is used as the end surface washing brush 3bc and the boundary curved surface washing brushes 3bx..., and this makes it possible not only to fabricate them from a single component easily at a low cost but also to protect the object to be washed M and wash the end portion Ms sufficiently.

(10) According to the preferred aspect, the end surface washing brush 3bc has, at the end thereof, the edge portions 33e... for scraping soil on the end surface of the object to be washed M and is formed with a plurality of protrusion portions 33... disposed at a predetermined density, and this makes it possible to wash even the uneven end portion Ms of the protruding object to be washed M effectively and sufficiently. Thus, when the teat Mm is used as the object to be washed M, it is possible not only to further help achieve in that milk is hygienically produced, the quality of milk is prevented from being degraded and mastitis or the like is avoided but also to prevent soil from being left. Hence, it is possible to eliminate or reduce a checking operation and an additional manual washing after the washing, with the result that the workability and the operation efficiency can be improved.

(11) Forming the protrusion portions 33... in a cylindrical shape according to the preferred aspect makes is possible not only to obtain the ideal end surface washing brush 3bc having a beneficial scraping effect but also to perform a molding process easily.

(12) When, according to the preferred aspect, the boundary curved surface washing brushes 3bx... are formed such that one or more than two sheet pieces 34s... have a large number of slit portions 34c..., it is possible to obtain the ideal boundary curved surface washing brushes 3bx... to which rubbish is unlikely to adhere.

(13) According to the preferred aspect, the boundary curved surface washing brushes 3bx... are formed such that protrusions in the lower portion of the sheet pieces 34s... are equal in length to protrusions in the middle portion thereof or such that protrusions in the lower portion of at least one of the sheet pieces 34s... are longer in length than protrusions in the middle portion thereof, and this makes it possible to easily fit the boundary curved surface washing brushes 3bx... into the shape of the end portion Ms of the object to be washed M. In particular, by forming the boundary curved surface washing brushes 3bx... such that the protrusions in the lower portion of the sheet pieces 34s... are longer in length than the protrusions in the middle portion thereof, it is possible to wash the boundary curved surface of the end portion Ms with less unevenness.

(14) According to the preferred aspect, the washing solution collection means 13 is provided that collects the remaining washing solution L after usage within the housing portion 2 and that stores it in the body unit U2, and this makes it possible to prevent the remaining dirty washing solution L after usage from being drained to the outside disadvantageously and unnecessarily.

(15) At least, the washing solution L is jetted above the washing member 8 through the jet portion 5 and washing is performed while the washing member 8 is rotated, and thereafter the jetting of the washing solution L above the washing member 8 is stopped and the washing member 8 is rotated to remove the remaining solution. Thus, it is possible not only to achieve the function of removing the washing solution L after the washing, using a simplified and compact configuration but also to automatically and quickly remove the washing solution L, that is, the removal of the remaining solution, and perform drying, with the result that manual wiping and failure to perform wiping are avoided. Moreover, since the fin portions 8wf... have both the solution removing function (the fan function) and the brush function, it is possible to wash the base portion Mmb of the object to be washed M effectively and sufficiently.

(16) According to the preferred aspect, when the washing solution L is jetted at least above the washing member 8, the washing member 8 is repeatedly rotated alternately in forward and reverse directions, that is, in both directions Fpn, and this makes it possible not only to enhance the washing performance but also to perform the washing effectively and satisfactorily.

(17) According to the preferred aspect, when the jetting of the washing solution L above the washing member 8 is stopped, the washing member 8 is rotated in a forward direction, that is, in one direction Fp, and this makes it possible to enhance the function of removing the remaining solution and effectively and satisfactorily remove the remaining solution.

(18) According to the preferred aspect, when the washing solution L is jetted from the lower jet portion 5d, washing is performed while the washing member 8 is rotated, the jetting of the washing solution L from the upper jet portion 5u is stopped and the remaining solution is removed while the washing member 8 is rotated, it is possible to sufficiently and effectively perform the washing because the washing and the removing of the remaining solution are performed simultaneously.

### Brief Description of Drawings

FIG. 1 is a cross-sectional side view showing the internal configuration of a washing unit in a washing device according to the most preferred embodiment of the present invention.
FIG. 2 is an external side view of the washing device.
FIG. 3 is a block diagram of the washing device.
FIG. 4 is a plan view of the washing unit in the washing device.
FIG. 5 is an external perspective view of the washing unit in the washing device.
FIG. 6 is an exploded perspective view of the washing unit in the washing device.
FIG. 7 is an exploded perspective view of a brush mechanism portion of the washing device.
FIGS. 8(a) and 8(b) is a diagram showing part of a boundary curved surface washing brush in the washing device and a cross-sectional side view showing part of a second washing brush portion.
FIG. 9 is a timing chart showing a sequence control pattern used when the washing device is operated.
FIG. 10 is a schematic side view showing the configuration of the washing unit at the time of washing in order to explain the operation of the washing device.
FIG. 11 is a schematic side view showing the configuration of the washing unit at the time of removal in order to explain the operation of the washing device.

### Reference Signs List

1: Washing device, 2: Housing portion, 2i: Insertion port of the housing portion, 3: Brush mechanism portion, 3a: First washing brush portion, 3b: Second washing brush portion, 3bc: End surface washing brush, 3bx: Boundary curved surface washing brush, 3by: Boundary curved surface washing brush, 3bz: Boundary curved surface washing brush, 4: Rotary drive portion, 5: Jet portion, 5u: Upper jet portion, 5d: Lower jet portion, 6: Washing solution supply means, 7: Electric power supply means, 8: Washing member, 8i: Insertion hole, 8w: Washing portion, 8wf...: Fin portions, 11: Brush supporting means, 12: Brush force applying means, 13: Washing solution collection means, 32: Brush molded member, 33e...: Edge portions, 33...: Protrusion portions, 34e...: Sheet pieces, 34c...: Slit portions, M: Protruding object to be washed, Mf: Circumferential surface portion of an object to be washed, Ms: End portion of the object to be washed, L: Washing solution, U1: Washing unit, U2: Body unit, Fpn: Both directions, Fp: One direction

### Description of Embodiments

The most preferred embodiment according to the present invention will now be described with reference to the accompanying drawings.

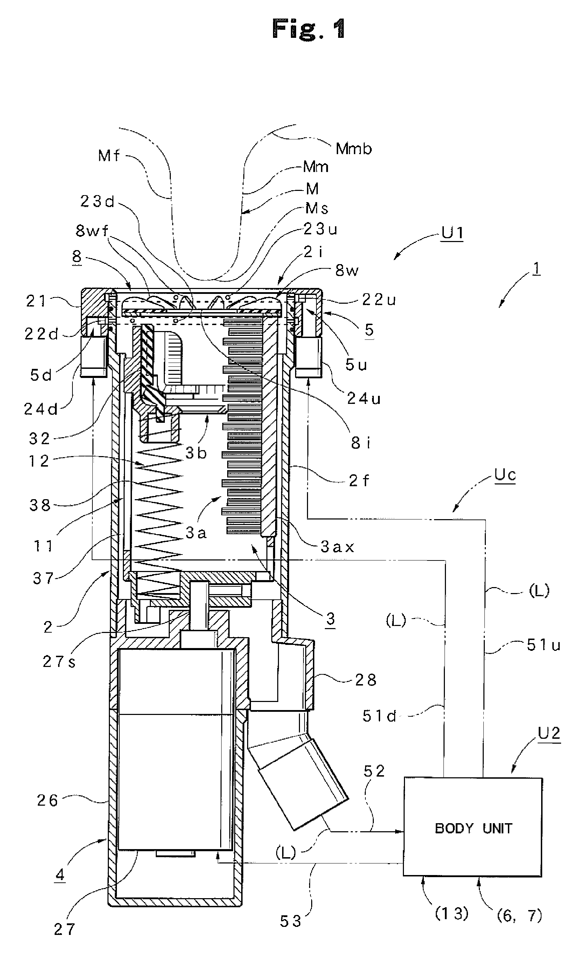

0036 The configuration of a washing device 1 according to this embodiment will first be specifically described with reference to FIGS. 1 to 8.

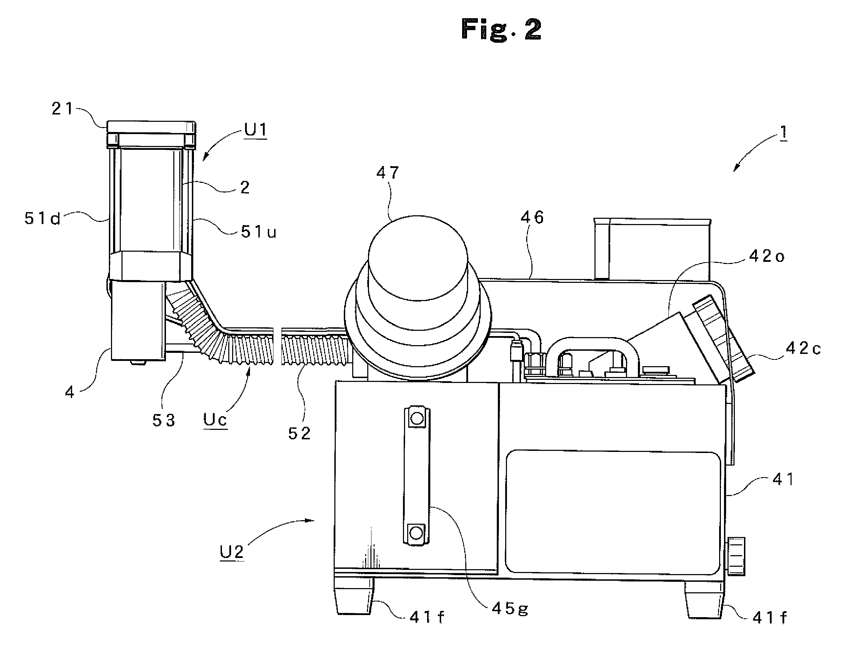

The washing device 1 is provided with a washing unit U1 and a body unit U2 shown in FIG. 2. A connection portion Uc having a predetermined length is attached to the washing unit U1; the washing unit U1 can be connected through the connection portion Uc to the body unit U2. This washing device 1 can be carried manually to a given place within a cowhouse.

As shown in FIG. 1, the washing unit U1 is basically provided with a housing portion 2, a brush mechanism portion 3, a rotary drive portion 4 and a jet portion 5. The overall housing portion 2 is formed in a cylindrical shape; an upper end opening serves as an insertion port 2i. Thus, a teat Mm (a protruding object to be washed M) can be inserted into the housing portion 2 through the insertion port 2i. On the upper portion of the outer circumferential surface 2f of the housing portion 2, a ring-shaped jet portion formation member 21 is attached. In this case, in the inner circumferential surface of the jet portion formation member 21, ring-shaped concave grooves along the circumferential direction are formed as a pair of solution passages 2u and 22d in upper and lower sides. In the outer circumferential surface 2f facing the solution passages 2u and 22d, a plurality of upper jet holes 23u... and a plurality of lower jet holes 23d... are formed and spaced along the circumferential direction. Thus, in an upper portion of the housing portion 2, an upper jet portion 5u and a lower jet portion 5d are spaced apart from each other in upper and lower sides, respectively; the upper jet portion 5u (the upper jet holes 23u...) is placed in the upper side of a washing member 8 that will be described later, and the lower jet portion 5d (the lower jet holes 23d...) is placed in the lower side of the washing member 8. The upper jet portion 5u and the lower jet portion 5d constitute the jet portion 5. The jet portion formation member 21 has connection opening portions 24u and 24d through which washing solution L is fed to the solution passages 22u and 22d.

The rotary drive portion 4 is formed by incorporating a brush motor (a direct-current motor) 27 into a casing 26; the rotor shaft of the brush motor 27 protrudes upward from the upper end surface of the casing 26. The upper end of the casing 26 is connected to the lower end opening of the housing portion 2. A drain solution opening portion 28 is formed integrally with the casing 26. Through this drain solution opening portion 28, the washing solution L after being used inside the housing portion 2 can be drained out.

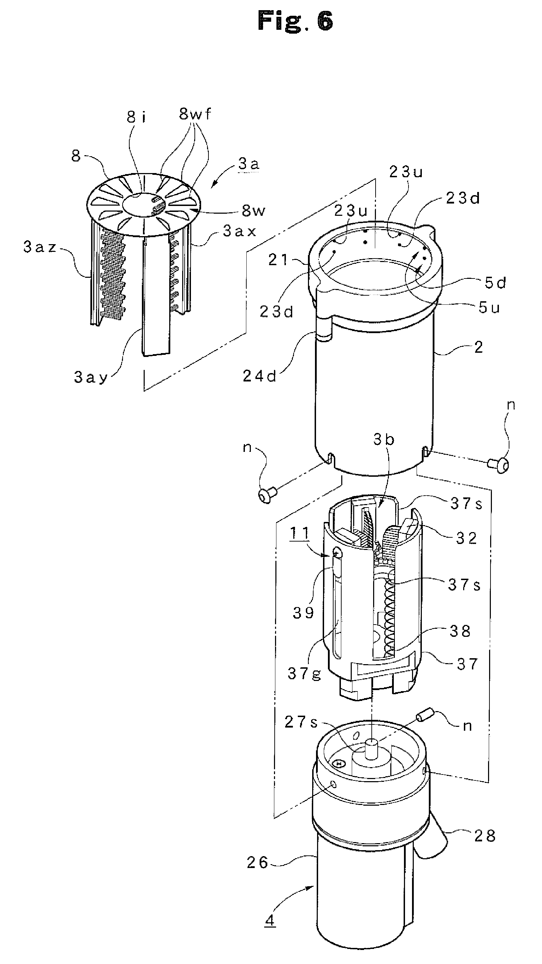

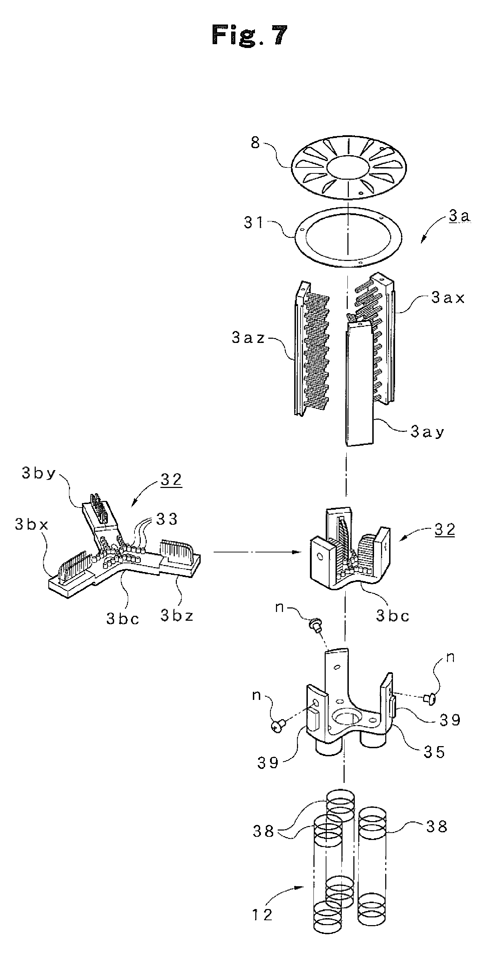

The brush mechanism portion 3 is provided with a first washing brush portion 3a for washing the circumferential surface portion Mf of the teat Mm inserted into the housing portion 2 and a second washing brush portion 3b for washing the end portion Ms of the teat Mm. The first washing brush portion 3a is provided with three washing brushes 3ax, 3ay and 3az shown in FIGS. 6 and 7; one ends (upper ends) of the washing brushes 3ax... are fixed to the lower surface of a coupling ring 31. In this way, the washing brushes 3ax... are placed 120 ° apart along the coupling ring 31 and are hung down from the coupling ring 31, and the ends of the washing brushes 3ax ... are placed to face the center axis of the coupling ring 31. As the materials of the washing brushes 3ax..., soft synthetic resin materials can be used that do not damage the teat Mm; the dimensions of the washing brushes 3ax... in the vertical direction, brush lengths and the like are selected in consideration of the length (the size) of the teat Mm, and, in particular, brush densities are selected such that rubbish is unlikely to adhere thereto (to be left thereon).

The second washing brush portion 3b is provided with a brush molded member 32 shown in FIG. 7. The brush molded member 32 is formed of elastic material such as rubber, preferably, low-hardness silicon rubber and is formed in a shape of a star. The brush molded member 32 has: in the middle thereof, an end surface washing brush 3bc that makes contact with the end surface of the end portion Ms of the teat Mm; and boundary curved surface washing brushes 3bx, 3by and 3bz that are placed 120 ° apart from each other with the end surface washing brush 3bc in the middle thereof, that extend in radial directions, namely, three directions and that make contact with the boundary curved surface extending from the end surface to the circumferential surface of the end portion Ms of the teat Mm. As described above, the brush molded member 32 formed of elastic material such as silicon rubber is used as the end surface washing brush 3bc and the boundary curved surface washing brushes 3bx..., and this advantageously makes it possible not only to fabricate them from a single component easily at a low cost but also to protect the object to be washed M and wash the end portion Ms sufficiently. By combination of the end surface washing brush 3bc with the boundary curved surface washing brushes 3bx..., it is possible to enhance the function of washing the end portion Ms of the object to be washed M, with the result that the washing can be performed efficiently and satisfactorily.

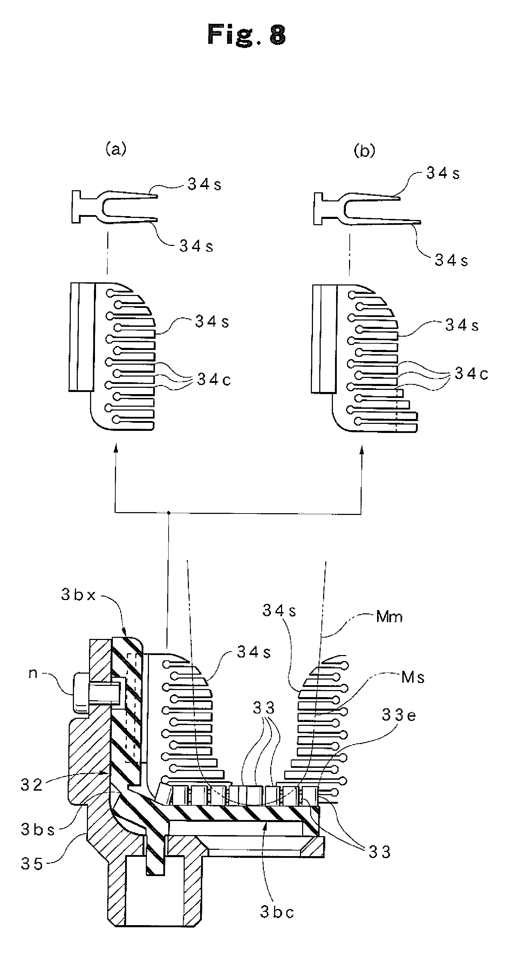

As shown in FIG. 8, the end surface washing brush 3bc is formed by placing a plurality of cylindrical protrusion portions 33... at a predetermined density. Since edge portions 33e... are formed in the upper ends (the top ends) of the protrusion portions 33..., it is possible to scrape soil on the teat Mm. Thus, it is possible to effectively and sufficiently wash objects of various shapes, in particular, even an object such as the end portion Ms of the teat Mm that has recesses (recess portions). The formation of the protrusion portions 33... in a cylindrical shape makes is possible not only to obtain the ideal end surface washing brush 3bc having a beneficial scraping effect but also to perform a molding process easily. It is important to select the density at which the protrusion portions 33 ... are placed; the selection is made in consideration of balance between adverse effects on the teat Mm in contact and the scraping performance.

As shown in FIGS. 8(a) and 8(b), the boundary curved surface washing brushes 3bx... are configured such that a large number of slit portions 34c... are formed in two adjacent sheet pieces 34s and 34s. FIG. 8(a) shows one type of sheet pieces 34s and 34s designed such that protrusions in the lower portion are equal in length to those in the middle portion; FIG. 8(b) shows another type of sheet pieces 34s and 34s designed such that, in one sheet piece 34s, protrusions in the lower portion are longer in length than those in the middle portion. Advantageously, the boundary curved surface washing brushes 3bx ... incorporating such sheet pieces 34s... can serve as the ideal boundary curved surface washing brushes 3bx... to which rubbish is unlikely to adhere; the boundary curved surface washing brushes 3bx ... can also easily be fitted into the shape of the end portion Ms of the object to be washed M. In particular, by forming the sheet pieces 34s... such that protrusions in the lower portion are longer in length than those in the middle portion, it is possible to wash the boundary curved surface of the end portion Ms with less unevenness. The boundary portions 3bs... between the boundary curved surface washing brushes 3bx... and the end surface washing brush 3bc are so formed as to be small in thickness as shown in FIG. 8. The second washing brush portion 3b is also provided with a base portion 35 shown in FIG. 7; the brush molded member 32 is fixed to this base portion 35. In this way, the boundary curved surface washing brushes 3bx... stands upright so as to be perpendicular to the end surface washing brush 3bc at the boundary portions 3bs .... Although, in the brush molded member 32 shown by way of example, the boundary curved surface washing brushes 3bx... formed separately are attached thereto, they may be all formed integrally.

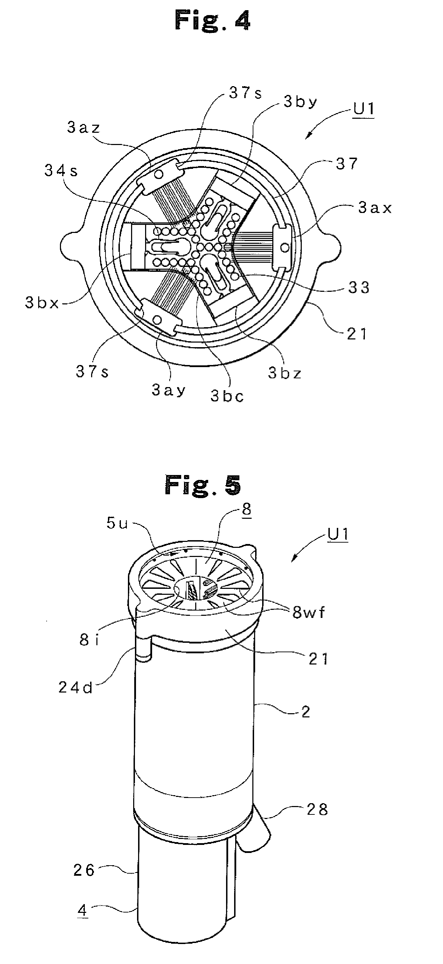

As shown in FIG. 6, the brush mechanism portion 3 is provided with a cup-shaped brush holder 37 that supports the first washing brush portion 3a and the second washing brush portion 3b, and the lower surface of the bottom portion of the brush holder 37 is coupled to the rotor shaft 27s in the rotary drive portion 4. The first washing brush portion 3a is fitted into the brush holder 37 from above. In this case, slit portions 37s that extend from the upper end of the brush holder 37 are formed in the brush holder 37, and the washing brushes 3ax ... of the first washing brush portion 3a are fitted into the slit portions 37s .... In this way, the washing brushes 3ax... are fixed on the circumferential surface of the brush holder 37. The second washing brush portion 3b is accommodated within the brush holder 37. Three springs 38 ... of brush force applying means 12 exert an upward force on the second washing brush portion 3b, and projection portions 39 formed in the base portion 35 are engaged with guide slits 37g... formed in the brush holder 37. In this way, brush supporting means 11 is configured such that the second washing brush portion 3b is supported by the brush holder 37 to freely move up and down. Since the brush mechanism portion 3 is configured as described above, as shown in FIG. 4, the washing brushes 3ax... and the boundary curved surface washing brushes 3bx... are alternately disposed 60 ° apart from each other along the circumferential direction.

As described above, the brush mechanism portion 3 is configured such that the first washing brush portion 3a, which can wash the circumferential surface portion Mf of the teat Mm and the second washing brush portion 3b, which can wash the end portion Ms are provided, and such that the brush supporting means 11, which can support the second washing brush portion 3b so that the second washing brush portion 3b freely moves up and down and the brush force applying means 12, which can exert an upward force on the second washing brush portion 3b are provided. Thus, it is possible to wash the end portion Ms of the teats Mm of different lengths without causing unevenness satisfactorily and advantageously all the time.

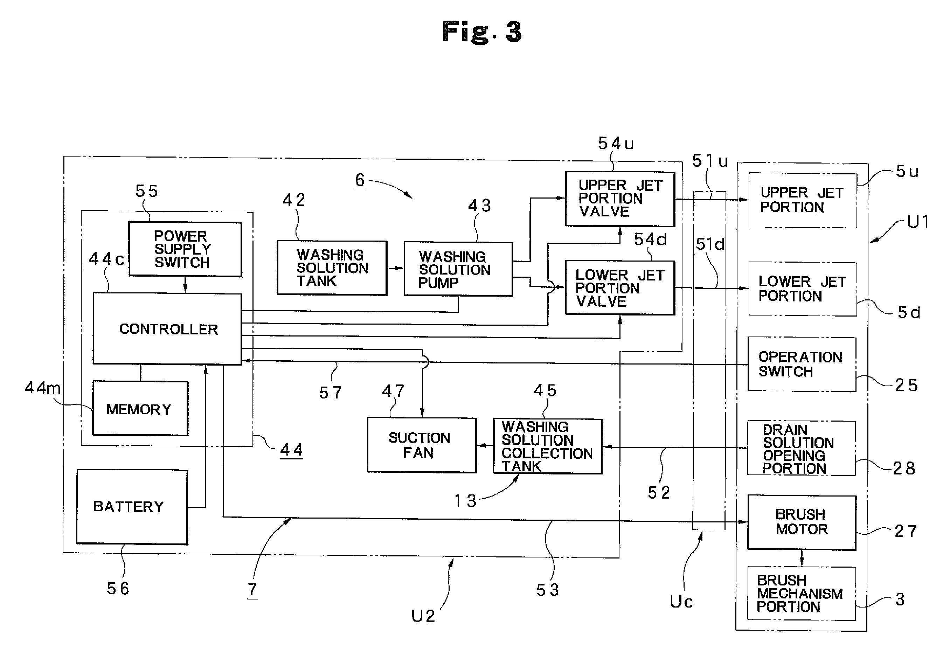

The washing member 8 is attached to the upper surface of the coupling ring 31 disposed on the upper end of the brush holder 37. As shown in FIGS. 6 and 7, the washing member 8 is formed in the shape of a disc and has, in the middle thereof, an insertion hole 8i through which the teat Mm is inserted. In this case, the inside diameter of the insertion hole 8i is selected such that, when the teat Mm is inserted, an unnecessary gap between the teat Mm and the insertion hole 8i is not produced. On the upper surface of the washing member 8, there is provided a washing portion 8w, specifically, the washing portion 8w having a plurality of fin portions 8wf... that protrude upward from the upper surface. In this case, the fin portions 8wf... are formed to extend radially, and are regularly spaced along a circumferential direction. The washing member 8 is integrally formed of elastic material such as rubber, preferably silicon rubber. The silicon rubber with a hardness higher than that of the silicon rubber used in the brush molded member 32 can be used. Thus, the washing member 8 is placed in the insertion port 2i and rotates along with the brush mechanism portion 3 to serve as a special member for washing the base portion Mmb of the teat Mm. The washing member 8 is integrally formed of elastic member such as silicon rubber in this way, and this makes it possible not only to easily fabricate it with a single component at a low cost but also to protect the teat Mm and wash the base portion Mmb sufficiently. The washing unit U1 is provided with an operation switch 25 (see FIG. 3) that can be operated with the housing portion 2 in the user's hand. In FIGS. 6 to 8, the symbol "n..." represents fixing screws or pins.

As shown in FIG. 2, the body unit U2 is provided with a casing 41 having leg portions 41f... on the bottom surface thereof, and incorporates, within the casing 41, a washing tank 42, a washing solution pump 43, a control portion 44 and a washing solution collection tank 45. In FIG. 2, the reference numeral 46 represents a grip attached to the upper surface of the casing 41; the washing device 1 can be carried by holding the grip 46. The reference numeral 42c represents a cap that is put on or removed from a solution inlet 42o of the washing tank 42; the reference numeral 45g represents a grip attached to the washing solution collection tank 45, and the use of this grip allows the washing solution collection tank 45 to be inserted into or removed from the body unit U2. The reference numeral 47 represents a suction fan attached to the washing solution collection tank 45.

FIG. 3 is a block system diagram showing the configuration of the body unit U2. The washing unit U1 and the body unit U2 are connected together via a connection portion Uc. The connection portion Uc includes two solution feed tubes 51u and 51d, a drain solution tube 52 and a power feed line 53. In the body unit U2, the inlet port of the washing solution pump 43 is connected to the washing tank 42. The discharge port of the washing solution pump 43 is connected to the connection opening portion 24u of the upper jet portion 5u through an upper jet portion valve 54u and the solution feed tube 51u, and is connected to the connection opening portion 24d of the lower jet portion 5d through the a lower jet portion valve 54d and the solution feed tube 51d. In this way, washing solution feed means 6 is provided that feeds the washing solution L to the washing unit U1. The suction fan 47 is provided in the washing solution collection tank 45, and this washing solution collection tank 45 is connected to the drain solution opening portion 28 via the drain solution tube 52. In this way, washing solution collection means 13 is provided that collects the remaining washing solution L after usage within the housing portion 2 and that stores it in the body unit U2. The control portion 44 is provided with a controller 44c that utilizes a microcomputer for performing various types of control. The controller 44c includes a memory 44m; this memory 44m has at least the function of recording various types of data and the function of storing a control program for performing sequence control. An operation switch 25 included in the washing unit U1 is connected to the controller 44c via wiring 57, and a power supply switch 55 and a battery 56 are connected thereto. The output portion of the controller 44c is connected to the brush motor 27 via the power feed line 53. In this way, electric power supply means 7 is provided that supplies electric power to the washing unit U1.

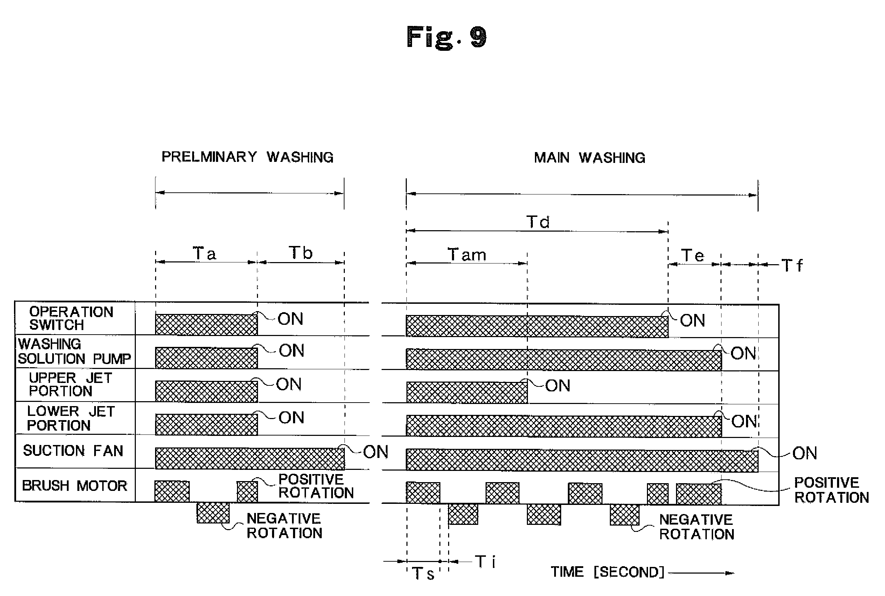

A description will now be given of a method of using the washing device 1 including a washing method according to the present invention and its operation with reference to FIGS. 1 to 8 based on FIGS. 9 to 11.

When the washing device 1 is used, a predetermined washing solution L is put into the washing tank 42, and the washing solution collection tank 45 is drained. The battery 56 that has been fully charged is mounted. Then, the washing device 1 is taken to a given washing place within a cowhouse. Since the second washing brush portion 3b receives an upward force from the springs 38..., the second washing brush portion 3b in the washing unit U1 that has not been mounted is in the most elevated position shown in FIG. 1. On the other hand, the washing operation consists of a preliminary washing step and a main washing step. FIG. 9 is a timing chart showing a sequence control pattern used when the preliminary washing and the main washing are performed.

First, the preliminary washing is performed. In the preliminary washing, the teats Mm are wetted with the washing solution L before the main washing is performed so that soil is washed more easily in the main washing. The washing unit U1 is first fitted to a given teat Mm. Specifically, the teat Mm is inserted into the housing portion 2 through the insertion hole 8i of the washing member 8 in the insertion port 2i. Then, the operation switch 25 is turned on. In this case, while the operation switch 25 is kept pressed, it is on; when this operation switch 25 is turned on, the washing solution pump 43, the upper jet portion valve 54u, the lower jet portion valve 54d, the brush motor 27 and the suction fan 47 are turned on accordingly.

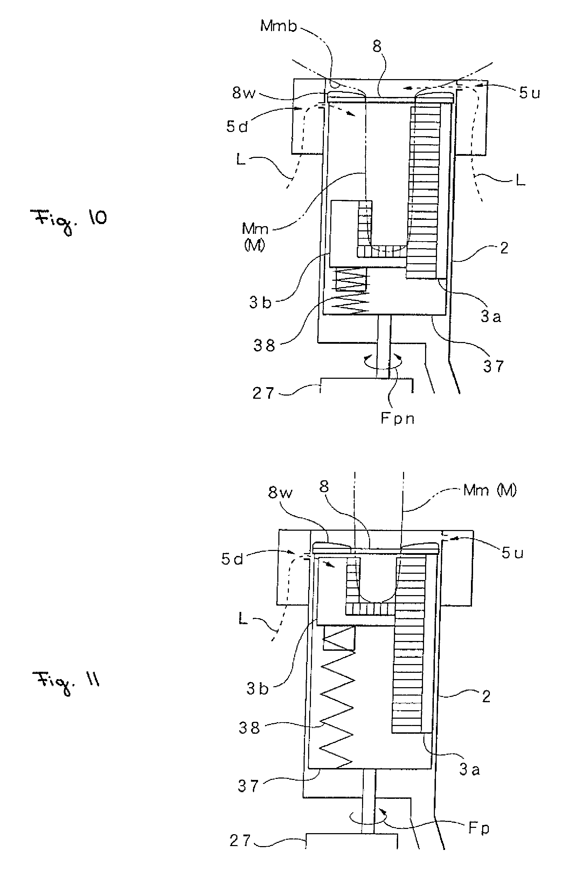

When the washing solution pump 43, the upper jet portion valve 54u and the lower jet portion valve 54d are turned on, the washing solution L within the washing tank 42 is supplied to the upper jet portion 5u and the lower jet portion 5d through the solution feed tubes 51u and 51d that are opened. Then, as shown in FIG. 10, the washing solution L is jetted above the washing member 8 through the upper jet holes 23u... and is jetted below the washing member 8 through the lower jet holes 23d.... Electric power is supplied to the brush motor 27 through the battery 56, the controller 44c and the power feed line 53; the brush motor 27 repeatedly rotates alternately in forward and reverse directions (in the directions of arrows Fpn in FIG. 10). As described above, when the washing solution L is jetted at least above the washing member 8, the washing member 8 is repeatedly rotated alternately in forward and reverse directions, that is, in both directions Fpn. This makes it possible not only to enhance the washing performance but also to perform the washing effectively and satisfactorily. In FIG. 9, the symbol Ts represents the forward rotation (or the reverse rotation) period, and the symbol Ti represents a slight period during which the brush motor 27 is stopped between the forward rotation and the reverse rotation. The periods of the forward rotation and the reverse rotation can be set at about 0.4 to 0.8 seconds. When the brush motor 27 is rotated, the first washing brush portion 3a, the second washing brush portion 3b and the washing member 8 are rotated together, and the preliminary washing is performed on the teat Mm. Furthermore, when the suction fan 47 is turned on, suction is performed within the drain solution tube 52; thus, the remaining washing solution L within the housing portion 2 after usage is collected (stored) via the drain solution tube 52 in the washing solution collection tank 45 in the body unit U2.

An operator stops pressing (turns off) the operation switch 25 as appropriate. In FIG. 9, the symbol Ta represents the "on" period of the operation switch 25. Since the purpose of the preliminary washing is to wet the teat Mm with the washing solution L, the period Ta is enough to be a slight period, that is, about a few seconds. The maximum period Tam is set for the period Ta, and when this maximum period Tam is exceeded, the main washing is performed using a control pattern that will be described later. When the operation switch 25 is turned off, the washing solution pump 43, the upper jet portion valve 54u, the lower jet portion valve 54d and the brush motor 27 are turned off. However, even when the operation switch 25 is turned off, the suction fan 47 is turned off a period Tb, for example, about a few seconds after the turning off of the operation switch 25. In this way, the preliminary washing is completed on one teat Mm. The same preliminary washing is sequentially performed on other three teats Mm....

After the preliminary washing is completed, the main washing is then performed. Although the basic operation in the main washing is the same as that in the preliminary washing, the operator can vary, as appropriate, the period (the "on" period) during which the operation switch 25 is kept pressed with consideration given to, for example, the degree of the soil of the teat Mm. The washing unit U1 is first fitted to a given teat Mm. Specifically, the teat Mm is inserted into the housing portion 2 through the insertion hole 8i of the washing member 8 in the insertion port 2i (see FIG. 10). Then, the operation switch 25 is turned on. In FIG. 9, the symbol Td represents the "on" period of the operation switch 25.

When the operation switch 25 is turned on as described above, the washing solution pump 43, the upper jet portion valve 54u, the lower jet portion valve 54d, the brush motor 27 and the suction fan 47 are turned on. Thus, as in the preliminary washing, the washing solution L within the washing tank 42 is supplied to the upper jet portion 5u and the lower jet portion 5d through the solution feed tubes 51u and 51d that are opened. Then, as shown in FIG. 10, the washing solution L is jetted above the washing member 8 through the upper jet holes 23u... and is jetted below the washing member 8 through the lower jet holes 23d.... The brush motor 27 repeatedly rotates alternately in forward and reverse directions (in the directions of arrows Fpn in FIG. 10). When the brush motor 27 is rotated, the first washing brush portion 3a, the second washing brush portion 3b and the washing member 8 are rotated together, with the result that the main washing is performed on the teat Mm.

In this case, in the first washing brush portion 3a, the washing on the circumferential surface portion Mf of the teat Mm is performed with the washing brushes 3ax.... In the second washing brush portion 3b, the washing on the boundary curved surface portion of the end portion Ms of the teat Mm is performed with the boundary curved surface washing brushes 3bx... using the sheet pieces 34s..., and the washing on the end surface portion of the end portion Ms of the teat Mm is performed with the end surface washing brush 3bc using the protrusion portions 33.... Here, since the boundary curved surface washing brushes 3bx... use the sheet pieces 34s..., rubbish is advantageously unlikely to adhere thereto; since the end surface washing brush 3bc uses the protrusion portions 33... that are formed cylindrically, it is possible to scrape soil on the teat Mm with the edge portions 33e... in the upper end thereof. Moreover, when the washing member 8 is rotated, the base portion Mmb of the teat Mm is washed with the washing portion 8w (the fin portions 8wf...); in this washing, the washing solution L that is jetted from the upper jet portion 5u disposed in the upper portion of the washing member 8 is used. Here, since the washing member 8 formed in the shape of a disc is used, before rubbish is scraped by the brush of the brush mechanism portion 3, part or the whole of the rubbish is removed by the washing member 8, and is quickly flowed away with the washing solution L. Specifically, the washing solution L that is used for washing the base portion Mmb enters, by the washing solution pressure and the suction pressure, the washing device 1 through a gap between the insertion hole 8i of the washing member 8 and the teat Mm, and flows toward the end portion Ms along the circumferential surface portion Mf of the teat Mm.

As described above, when the washing is performed, it is possible to effectively and sufficiently wash the base portion Mmb of the teat Mm. Thus, it is possible not only to prevent soil from adhering to a teat cup liner at the time of milking and help achieve in that milk is hygienically produced, the quality of milk is prevented from being degraded and mastitis or the like is avoided but also to prevent soil from being left. Hence, it is possible to eliminate or reduce a checking operation and an additional manual washing after the washing, with the result that the workability and the operation efficiency can be improved. Even when rubbish (such as rice straw, sawdust powder, chaff or dung) adheres to the teat Mm, before the rubbish is scraped by the brush of the brush mechanism portion 3, it is removed by the washing member 8, and is quickly flowed away with the washing solution L, with the result that the rubbish can be prevented from adhering to the brush of the brush mechanism portion 3. Thus, it is possible not only to eliminate or reduce the lowering of washing performance and an operation of removing rubbish that adheres to the brush but also to effectively wipe soil with a smaller amount of the washing solution L. Furthermore, since the base portion Mmb of an object to be washed M is washed by the rotation of the washing member 8 having the washing portion 8w on the upper surface thereof, it is unnecessary to press the washing unit U1 onto the base portion Mmb with an excessive force. Thus, it is possible not only to prevent an unnecessary burden from being imposed on the base portion Mmb but also to prevent the washing period from being made longer unnecessarily. Moreover, since the jet portion 5 is provided that is composed of the upper jet portion 5u disposed above the washing member 8 and the lower jet portion 5d disposed below the washing member 8, it is possible to effectively wash an area from the end portion Ms to the base portion Mmb of the teat Mm with a small amount of the washing solution L.

In addition, the washing solution L is jetted above the washing member 8 through the jet portion 5 and washing is performed while the washing member 8 is rotated, and thereafter the jetting of the washing solution L above the washing member 8 is stopped and the washing member 8 is rotated to remove the remaining solution. Thus, it is possible not only to achieve the function of removing the washing solution L after the washing, using a simplified and compact configuration but also to automatically and quickly remove the washing solution L, that is, the removal of the remaining solution, and perform drying, with the result that manual wiping and failure to perform wiping are avoided. Moreover, since the fin portions 8wf... have both the solution removing function (the fan function) and the brush function, it is possible to wash the base portion Mmb of the object to be washed M effectively and sufficiently.

On the other hand, since the inside of the drain solution tube 52 is sucked by the suction fan 47, the remaining washing solution L after usage within the housing portion 2 is collected (stored) through the drain solution tube 52 in the washing solution collection tank 45 in the body unit U2. Thus, it is possible to prevent the remaining dirty washing solution L after usage from being disadvantageously drained to the outside.

The operator stops pressing (turns off) the operation switch 25 as appropriate. In FIG. 9, the symbol Td represents the "on" period of the operation switch 25. In the main washing, normal washing is performed, and thus the period Td is set longer than the period Ta at the time of the preliminary washing. In the example shown, the period Td is about twice as long as the period Ta. Since the period Td exceeds the maximum period Tam, when the maximum period Tam elapses, the upper jet portion valve 54u is automatically turned off, with the result that the jetting of the washing solution L through the upper jet portion 5u is stopped. Hence, after the maximum period Tam elapses, the washing on the base portion Mmb of the teat Mm is substantially completed, and the removal of the remaining solution and drying are started with the rotating fin portions 8wf... of the washing member 8.

When the operation switch 25 is turned off, the brush motor 27 rotates only in a forward direction as shown in FIG. 9 (in the direction of an arrow Fp in FIG. 11). The washing solution pump 43 and the lower jet portion valve 54d remain on, and, when a preset period Te (for example, about a few seconds) elapses, the washing solution pump 43, the lower jet portion valve 54d and the brush motor 27 are turned off. Therefore, after the operation switch 25 is turned off, the washing unit U1 is removed from the teat Mm within the period Te. In this case, since the fin portions 8wf... are rotated, the washing member 8 functions as a blowing fan within the period Te. Thus, by removing the washing unit U1 from the teat Mm within the period Te, it is possible to quickly remove the remaining solution and dry the teat Mm. In particular, even when such fan function is performed and the washing solution L continues to be jetted from the lower jet portion 5d while the teat Mm is removed, if the diameter of the circumferential surface portion Mf of the teat Mm is larger than the insertion hole 8i of the washing member 8, the remaining solution is removed through the insertion hole 8i, or if the diameter of the circumferential surface portion Mf of the teat Mm is smaller than the insertion hole 8i of the washing member 8, it is possible to more quickly perform the removal of the remaining solution and drying by both blowing air at a high speed through a gap between the insertion hole 8i and the circumferential surface portion Mf and rotating the brush mechanism portion 3 only in a forward direction. FIG. 11 shows the state at the time of the removal. Then, after the period Te elapses, when a period Tf further elapses (for example, a few seconds), the suction fan 47 is automatically turned off. In this way, the main washing on one teat Mm is completed. The same main washing step is sequentially performed on the other three teats Mm....

Although the various embodiments are described above, the present invention is not limited to these embodiments, and amendment, addition and removal on detailed configuration, shape, quantities, values, etc. are possible as appropriate without departing from the scope of the present invention. For example, although the above description deals with the case where the washing member 8 is formed with the fin portions 8wf... protruding upward from the upper surface of the washing member 8, the washing member 8 may be formed in the shape of a brush. Although the above description deals with the case where the brush mechanism portion 3 is composed of the first washing brush portion 3a for washing the circumferential surface portion Mf of the object to be washed M and the second washing brush portion 3b for washing the end portion Ms of the object to be washed M, the first washing brush portion 3a and the second washing brush portion 3b may be formed integrally. Although the above description deals with the case where the washing unit U1 and the body unit U2 are connected together via the connection portion Uc, the washing unit U1 and the body unit U2 may be formed integrally, that is, the body unit U2 may be incorporated into the washing unit U1. Although in the above description, the silicon rubber is shown as an example of the elastic material of which the end surface washing brush 3bc is formed, any other elastic material may be used instead. Although the above description deals with the case where the protrusion portions 33 ... are formed cylindrically, any other shape of the same function may be applicable such as a circular cone whose view seen from the side surface shows a trapezoid (an inverted trapezoid), a cylindroid and a prismatic shape. The meaning of the washing includes an act of wiping and cleaning the surface. Thus, the washing solution includes antiseptic solution.

### Industrial Applicability

Although, as described above, the washing device 1 of the present invention is preferably used for washing the teats Mm of a dairy cow, it is applicable to any other protruding object to be washed such as fingers as long as it is a protruding object to be washed M.

## Claims

1. A washing device comprising:
a washing unit comprising:
a housing portion into which a protruding object to be washed can be inserted through an insertion port;
a brush mechanism portion washing the object to be washed that is inserted into the housing portion;
a rotary drive portion rotating the brush mechanism portion; and
a jet portion jetting washing solution into the housing portion, and
a body unit comprising at least:
washing solution supply means supplying the washing solution to the washing unit; and
electric power supply means supplying electric power,
wherein the washing device further comprises: a washing member that is disposed in the insertion port, that rotates along with the brush mechanism portion, that includes a washing portion on an upper surface thereof, that includes, in a middle thereof, an insertion hole through which the object to be washed is inserted and that is formed in a shape of a disc; a jet portion that includes an upper jet portion disposed above the washing member and a lower jet portion disposed below the washing member; and washing solution supply means supplying the washing solution to the upper jet portion and/or the lower jet portion.

2. The washing device of claim 1,
wherein the washing member includes the washing portion comprising one or more than two fin portions protruding upward from the upper surface.

3. The washing device of claim 1,
wherein the washing member is integrally formed of elastic material.

4. The washing device of claim 1,
wherein the brush mechanism portion includes a first washing brush portion washing a circumferential portion of the object to be washed and a second washing brush portion washing an end portion of the object to be washed.

5. The washing device of claim 4,
wherein the second washing brush portion includes an end surface washing brush that makes contact with an end surface of the end portion of the object to be washed and a boundary curved surface washing brush that radially extends from the end surface washing brush and that makes contact with at least a boundary curved surface extending from the end surface to the circumferential surface portion.

6. The washing device of claim 5,
wherein a brush molded member formed of elastic material is used as the end surface washing brush and the boundary curved surface washing brush.

7. The washing device of claim 5 or 6,
wherein the end surface washing brush includes, at an end thereof, an edge portion scraping soil on the end surface of the object to be washed and is formed with a plurality of protrusion portions disposed at a predetermined density.

8. The washing device of claim 7,
wherein the protrusion portions are formed cylindrically.

9. The washing device of claim 5 or 6,
wherein the boundary curved surface washing brush is formed such that one or more than two sheet pieces have a large number of slit portions.

10. The washing device of claim 9,
wherein the boundary curved surface washing brush is formed such that protrusions in a lower portion of the sheet pieces are equal in length to protrusions in a middle portion thereof or such that protrusions in a lower portion of at least one of the sheet pieces are longer in length than protrusions in a middle portion thereof.

11. The washing device of claim 4 or 5, further comprising:
brush supporting means supporting the second washing brush portion such that the second washing brush portion freely moves up and down and brush force applying means exerts an upward force on the second washing brush portion.

12. The washing device of claim 1, further comprising:
washing solution collection means that collects the remaining washing solution after usage within the housing portion and that stores the remaining washing solution in the body unit.

13. A method of performing washing with a washing device, comprising the steps of:
inserting a protruding object to be washed into a housing portion through an insertion portion;
rotating, with a rotary drive portion, a brush mechanism portion disposed within the housing portion; and
jetting washing solution from a jet portion into the housing portion,
wherein, since one or more than two fin portions protruding upward from an upper surface are provided in the insertion portion and a washing member that includes, in a middle thereof, an insertion hole through which the object to be washed is inserted and that is formed in a shape of a disc is disposed, washing is performed by jetting the washing solution, at least, above the washing member from the jet portion and rotating the washing member, and thereafter the jetting of the washing solution above the washing member is stopped and the washing member is rotated to remove the remaining washing solution.

14. The method of performing washing with the washing device, according to claim 13, further comprising the step of repeatedly rotating the washing member alternately in forward and reverse directions, that is, in both directions when the washing solution is jetted above the washing member.

15. The method of performing washing with the washing device, according to claim 13, further comprising the step of rotating the washing member in a forward direction, that is, in one direction when the jetting of the washing solution above the washing member is stopped.

16. The method of performing washing with the washing device, according to claim 13,
wherein the jet portion includes an upper jet portion disposed above the washing member and a lower jet portion disposed below the washing member.

17. The method of performing washing with the washing device, according to claim 16, further comprising the step of jetting the washing solution from the lower jet portion and rotating the washing member to perform washing and stopping the jetting of the washing solution from the upper jet portion and rotating the washing member to remove the remaining washing solution.
